**Europäisches Patentamt**

**European Patent Office**

**Office européen des brevets**

(11) Veröffentlichungsnummer: **0 516 998 A1**

# EUROPÄISCHE PATENTANMELDUNG

(21) Anmeldenummer: **92107762.4**

(22) Anmeldetag: **08.05.92**

(51) Int. Cl.5: **E21B 17/042**, F16L 15/04

(30) Priorität: **04.06.91 DE 9106846 U**

(43) Veröffentlichungstag der Anmeldung:
**09.12.92 Patentblatt 92/50**

(84) Benannte Vertragsstaaten:
**AT CH DE FR GB LI**

(71) Anmelder: **THYSSEN INDUSTRIE AG**
**Am Thyssenhaus 1**
**W-4300 Essen 1(DE)**

(72) Erfinder: **Rammelsberg, Jürgen, Dr.**
**Landgraferstrasse 70**
**W-4690 Herne 2(DE)**
Erfinder: **Stockhaus, Rudolf, Dipl.-Ing.**
**Bruchstrasse 35**
**W-4320 Hattingen(DE)**

(74) Vertreter: **Dahlkamp, Heinrich-Leo, Dipl.-Ing.**
**Thyssen Industrie AG Patentabteilung Am**
**Thyssenhaus 1 Postfach 10 37 45**
**W-4300 Essen 1(DE)**

(54) **Vortriebsrohr aus duktilem Gusseisen.**

(57) Die Erfindung bezieht sich auf ein Vortriebsrohr aus duktilem Gußeisen für im unterirdischen Vortrieb hergestellte, nicht begehbare Tunnel, insbesondere für die Herstellung von Hausanschlüssen für Abwasserleitungen.

Erfindungsgemäß soll das Vortriebsrohr bestehen aus:

a) einem Rohrschaft (1) aus duktilem Gußeisen,

b) in der Rohrwand integrierter Muffe (9) mit Innengewinde (3),

c) in der Muffe (9) angeordnetem Sitz (4) zur Aufnahme eines Dichtelementes (5) und

d) einem auf dem der Muffe (4) abgewandten Rohrende (8) angeordneten passenden Außengewinde (10).

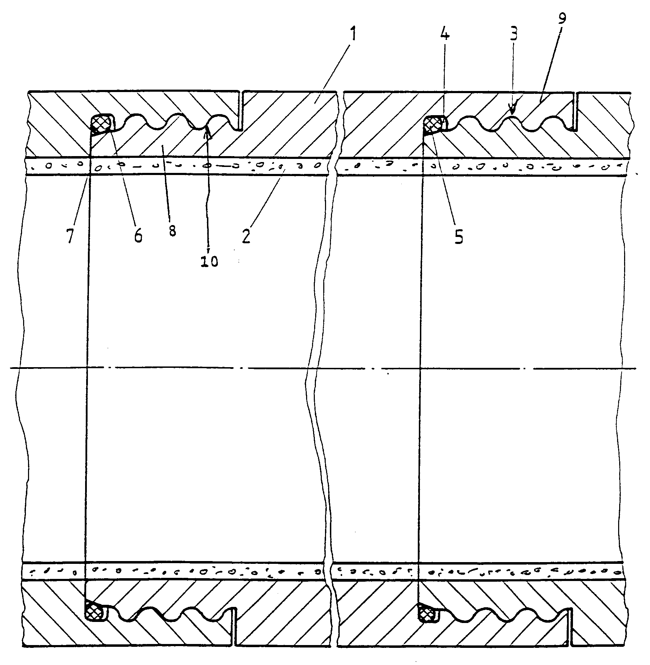

Der Zusammenfassung ist die Figur beizufügen.

EP 0 516 998 A1

Die Erfindung bezieht sich auf ein Vortriebsrohr für im unterirdischen Vortrieb hergestellte, nicht begehbare Tunnel, insbesondere für die Herstellung von Hausanschlüssen für Abwasserleitungen.

Bei Neuverlegung und Sanierung von unterirdischen Entsorgungskanälen hat sich in den letzten Jahren die Vortriebstechnik zu einem beachtlichen technischen Niveau entwickelt. Es gibt Städte, in denen bereits fast die Hälfte aller unterirdisch verlegten Kanalrohre in der geschlossenen Bauweise gebaut werden.

Mit der Entwicklung des unterirdischen Rohrleitungsbaues im Bereich nicht begehbarer Innendurchmesser ergab sich die Notwendigkeit, die erforderlichen Hausanschlüsse ebenfalls unterirdisch herzustellen.

Zu diesem Zweck sind mehrere Verfahren bekannt geworden, wobei die Schwierigkeit darin besteht, relativ kleinkalibrige Vortriebsmaschinen und -verfahren zu entwickeln, die in der Lage sind, Hausanschlußleitungen mit einem Innendurchmesser von 150 mm zielgenau an den bereits liegenden Hauptkanal heranzuführen und dort dicht anzuschließen. Es sind derzeit mehrere Verfahren in Erprobung. Grundsätzlich gibt es zwei Möglichkeiten der Anordnung von Hausanschlüssen:

1. Entweder wird der Hausanschluß rechtwinklig zum Hauptkanal vorgetrieben; dabei ist für jedes Haus eine eigene Anbohrung des Hauptkanals erforderlich.

2. Mehrere Anschlüsse benachbarter Häuser werden sternförmig zu einem gemeinsamen Sammelschacht vorgetrieben, der in der Trasse des Hauptkanals liegt.

Für den letzteren Fall ist es auch möglich, die Vortriebsrichtung vom Schacht zum Haus zu wählen; hier sind etwas geringere Genauigkeiten des Vortriebsverfahrens erforderlich.

Die Vortriebsarten unterscheiden sich in der Technik der Förderung des Bohrkleins; zum einen kann das Bohrklein hydraulisch zur Startgrube gefördert werden, zum anderen kann es mit einer Förderschnecke zurückgebracht werden. Weiterhin sind mehrere Vermessungs- und Steuerungsverfahren bekannt geworden, auf die hier jedoch nicht weiter eingegangen sein muß.

Die in der Abwasserentsorgung üblichen Werkstoffe wurden in dieser Entwicklungsphase für die unterirdischen vorgetriebenen Hausanschlußleitungen beibehalten; das sind im wesentlichen Rohre aus Steinzeug und aus Kunststoff. Beiden Rohrmaterialien haften gewisse Schwächen an, die besonders in ihren mechanischen Eigenschaften liegen.

Aus diesem Grund hat es nicht an Überlegungen gefehlt, mechanisch leistungsfähigere Rohrmaterialien für den angegebenen Verwendungszweck zu benutzen. Ein in steigender Anwendung begriffener Rohrwerkstoff ist das duktile Gußeisen.

Aus der DE 37 03 580 A1 ist ein Vortriebsrohr aus duktilem Gußeisen und ein Verfahren zum Herstellen eines Tunnels im unterirdischen Schildvortrieb bekannt, das aus einem Muffenrohr besteht und bis auf ein mantelfreies Einsteckende mit einem außenzylindrischen Betonmantel versehen ist.

Die bisher übliche Baulänge derartiger duktiler Gußrohre von 6 m ist für einen unterirdischen Hausanschluß-Vortrieb wegen der Forderung nach möglichst kleinen Startgruben nicht einsetzbar.

Zusätzlich kommt bei den unterirdischen Vortriebsverfahren zur Herstellung von Hausanschlußleitungen die Forderung zum Tragen, daß beim Antreffen von unvorhergesehenen Hindernissen der bis dahin vorgetriebene Rohrstrang wieder zurückgezogen werden muß, um evtl. mit anderen Werkzeugen das Hindernis zertrümmern zu können.

Aufgabe der Erfindung ist es, einen Hausanschluß-Vortriebsrohr aus duktilem Gußeisen vorzuschlagen, das den genannten Anforderungen entspricht.

Zur Lösung dieser Aufgabe wird die Merkmalskombination a) bis d) des Anspruches 1 vorgeschlagen. In den Unteransprüchen 2 bis 4 sind weitere Ausführungsformen der Erfindung beschrieben.

Das erfindungsgemäße Vortriebsrohr erfüllt für Hausanschlußleitungen insbesondere die folgenden Anforderungen:

- hohe Druckfestigkeit des Werkstoffes, mit der Fähigkeit zur Aufnahme von Spannungsspitzen ohne mechanische Versagenserscheinungen (Brüche)
- vakuumdichte Rohrverbindungen (für aussagefähige Dichtheitsprüfung)
- längskraftschlüssige Verbindung (für die Rückzugsmöglichkeit)
- kurze Baulänge (vorzugsweise 1 m Länge und kleiner)
- lichte Weite von 150 mm
- möglichst geringes Gewicht, um das Rohr in den kleinen Startbaugruben bzw. in Kellerräumen ohne Schwierigkeiten handhaben zu können.

Die Erfindung wird anhand der beigefügten Figur beispielsweise näher erläutert.

Das Rohr besteht aus einem Schaft 1, der mit einer geeigneten Innenauskleidung 2 als Korrosionsschutz den chemischen Angriffen durch das fließende Abwasser widerstehen kann. Eine in der Rohrwand integrierte Muffe 9 enthält ein Innengewinde 3 und einen Sitz 4 zur Aufnahme eines einfachen O-Ringes als Dichtelement 5. Weiterhin weist das Rohr auf dem der Muffe abgewandten Ende 8 ein passendes Außengewinde 10 auf. Zusätzlich ist das Ende des Außengewindes 10 mit einer Fase 6 so ausgeformt, daß der Dichtring 5 beim Zusammenschraubvorgang verpreßt wird und so die Abdichtung gewährleistet. Das beschriebene Vortriebsrohr vereinigt die anfangs gestellten Anforderungen in idealer Weise. Es hat bei einer Baulänge von 50 cm ein Gewicht von etwa 15 kg und ist deswegen unter beengten Platzverhältnissen gut zu handhaben.

Die Längskräfte beim Vorschub werden durch die Kraftübertragungsflächen 7 und partiell durch die Gewindegänge übertragen. Durch die exakte Kammerung des O-Rings 5 in dem Sitz 4 ist die Rohrverbindung dauerhaft dicht, und zwar gegen inneren Überdruck oder Unterdruck.

Es sind hierfür mehrere Herstellverfahren denkbar:

- zum einen ist dieses Rohr in einer herkömmlichen Sandformtechnik herzustellen, wobei es besonderer gießereitechnischen Fähigkeiten bedarf, die erforderliche Genauigkeit des Rohrgewindes zu erzeugen

- zum anderen besteht die Möglichkeit, diese Rohre nach dem bekannten Schleudergießverfahren zunächst in größeren Längen herzustellen, um sie danach mit Hilfe spanabhebender Verfahren ebenfalls zu Rohren zu verarbeiten, die den angegebenen Anforderungen entsprechen.

**BEZUGSZEICHENLISTE**

1  Rohrschaft
2  Innenauskleidung als Korrosionsschutz
3  Innengewinde der Muffe 9
4  Sitz für Dichtelement
5  O-Ring als Dichtelement
6  Fase
7  Kraftübertragungsfläche
8  Rohrende mit Außengewinde 10
9  Muffe mit Innengewinde 3
10  Außengewinde am Rohrende 8

**Patentansprüche**

1.  Vortriebsrohr aus duktilem Gußeisen für im unterirdischen Vortrieb hergestellte, nicht begehbare Tunnel, insbesondere für die Herstellung von Hausanschlüssen für Abwasserleitungen, bestehend aus
    a) einem Rohrschaft (1) aus duktilem Gußeisen,
    b) in der Rohrwand integrierter Muffe (9) mit Innengewinde (3),
    c) in der Muffe (9) angeordnetem Sitz (4) zur Aufnahme eines Dichtelementes (5) und
    d) einem auf dem der Muffe (4) abgewandten Rohrende (8) angeordneten passenden Außengewinde (10).

2.  Vortriebsrohr aus duktilem Gußeisen nach Anspruch 1, dadurch gekennzeichnet, daß das Ende des Außengewindes (10) mit einer Fase (6) so ausgeformt ist, daß das Dichtelement (5) beim Zusammenschraubvorgang abdichtend verpreßt wird.

3.  Vortriebsrohr aus duktilem Gußeisen nach Anspruch 1 oder 2, dadurch gekennzeichnet, daß zur Aufnahme der Längskräfte beim Vorschub am Rohrende (8) und in der Muffe (9) Kraftübertragungsflächen (7) angeordnet sind.

4.  Vortriebsrohr aus duktilem Gußeisen nach einem der Ansprüche 1 bis 3, dadurch gekennzeichnet, daß das Vortriebsrohr bei einer lichten Weite von ca. 150 mm eine Länge von ≤ 1 m aufweist.

Europäisches
Patentamt

EUROPÄISCHER RECHERCHENBERICHT

Nummer der Anmeldung

EP    92 10 7762

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2 324 973 (ATTOCK OILFIELD EQUIPMENT COMPANY LIMITED) <br> * Seite 2, Zeile 23 - Seite 3, Zeile 10 * <br> * Seite 6, Zeile 9 - Zeile 34; Abbildung * <br> --- | 1-3 | E21B17/042 <br> F16L15/04 |
| X | GB-A-2 161 569 (DRIL-QUIP INC.) <br> * Seite 1, Zeile 80 - Zeile 105 * <br> * Seite 4, Zeile 104 - Seite 5, Zeile 18; Abbildungen 5,6 * <br> --- | 1-3 | |
| X | GB-A-0 866 996 (ATLAS BRADFORD COMPANY) <br> * Seite 1, Zeile 61 - Zeile 85; Abbildungen * <br> --- | 1,2 | |
| A | US-A-4 253 687 (MAPLES) <br> * Spalte 4, Zeile 62 - Spalte 5, Zeile 33; Abbildung 1 * <br> --- | 1-3 | |
| A | EP-A-0 395 998 (THYSSEN INDUSTRIE AG) <br> * Zusammenfassung; Abbildung 1 * <br> --- | 1 | |
| P,X | DE-U-9 106 846 (THYSSEN INDUSTRIE AG) <br> * das ganze Dokument * | 1-4 | RECHERCHIERTE SACHGEBIETE (Int. Cl.5 ) <br><br> E21B <br> F16L <br> E21D |

Der vorliegende Recherchenbericht wurde für alle Patentansprüche erstellt

| Recherchenort | Abschlußdatum der Recherche | Prüfer |
|---|---|---|
| DEN HAAG | 02 SEPTEMBER 1992 | LINGUA D.G. |